# EUROPÄISCHE PATENTSCHRIFT

(11) **EP 4 155 601 B1**
(45) Veröffentlichungstag und Bekanntmachung des Hinweises auf die Patenterteilung: **18.06.2025**
(21) Anmeldenummer: 22194030.7
(22) Anmeldetag: 06.09.2022
(51) Int. Cl.: F17C 3/08

(54) **KRYOGEN-SPEICHERSYSTEM**
CRYOGENIC STORAGE SYSTEM
SYSTÈME DE STOCKAGE DE CRYOGÈNE

(30) Priorität: 23.09.2021 DE 102021210616
(43) Veröffentlichungstag der Anmeldung: 29.03.2023
(73) Patentinhaber: MAGNA STEYR Fahrzeugtechnik GmbH & Co KG, 8041 Graz (AT)
(72) Erfinder: STUBENRAUCH, Martin, 8142 Wundschuh (AT)
(74) Vertreter: Zangger, Bernd

(56) Entgegenhaltungen:
- EP-A2- 1 180 637
- DE-C5- 19 645 488

## Beschreibung

### Gebiet der Erfindung

Die vorliegende Erfindung betrifft ein Speichersystem zur Speicherung eines kryogenen Mediums, insbesondere zur Speicherung von Wasserstoff.

### Stand der Technik

Es ist bekannt, dass kryogene Medien, also tiefkalte und zumindest teilweise flüssige Medien, wie Wasserstoff oder Helium, in einem Speicherbehälter aufbewahrt werden können, um Energie, beispielsweise zum Antrieb eines Fahrzeugs, eines Schiffes, eines Flugzeugs oder einer Rakete zu transportieren. Das Medium liegt dabei üblicherweise teilweise in flüssiger Form im Speicherbehälter vor und teilweise auch in Gasform.

Bei kryogenen Speichersystemen ist während des Betriebs ein Druckaufbausystem erforderlich, dass den bei der gasförmigen oder flüssigen Entnahme von beispielsweise Wasserstoff entstehenden Druckabfall ausgleicht. Dies wird in der Regel entweder durch einen Innentankwärmetauscher (geschlossenes Rohrleitungssystem) oder durch direkte Verdampfung (offenes System) gewährleistet. Für diese Art des Druckaufbaues ist einerseits eine Entnahme von Wasserstoff erforderlich andererseits auch eine Wärmequelle (üblicherweise Abwärme des Verbrauchers). Wird kein Wasserstoff entnommen und soll trotzdem ein höheres Druckniveau erreicht werden, so ist dies mit Hilfe von elektrischen Heizern, sogenannten "Blowern" oder mit Kryo-Flüssigkeitspumpen möglich.

Moderne mobile Flüssigwasserstoffspeicheranwendungen erfordern Druckaufbausysteme, die einerseits einen Druckaufbau ermöglichen ohne Wasserstoff zu entnehmen und andererseits wenig Bauraum einnehmen, wenig Gewicht als auch geringen elektrischen Energiebedarf haben. Elektrische Heizer, Blower und Pumpen können dies nicht oder nur teilweise, mit hohem technischen Aufwand oder hohem elektrischen Energiebedarf, erfüllen, was für mobile Anwendungen einen großen Nachteil darstellt.

Aus der DE 196 45 488 C5 ist ein System zum Entnehmen von kaltem Gas aus einem Kryotank bekannt, mit einem isolierten Speicherbehälter für tiefkaltes, verflüssigtes Gas und einer Entnahmeleitung, welche aus dem Speicherbehälter zu einem Verbraucher herausführt, wobei ein Verdampfungsvolumen mit der Entnahmeleitung verbunden ist, wobei flüssiges Gas durch die Entnahmeleitung in das Verdampfungsvolumen gelangt, dort teilweise verdampft und das verdampfte Gas zumindest teilweise über die Entnahmeleitung in den Speicherbehälter zurückströmt, wobei die Entnahmeleitung das einzige Mittel zum Ausgleich eines Druckabfalls beim Entnehmen von kaltem Gas aus dem Kryotank ist.

### Zusammenfassung der Erfindung

Es ist eine Aufgabe der Erfindung, ein kryogenes Speichersystem anzugeben, das einen Druckaufbau ohne Entnahme von Wasserstoff auf technisch einfache und kostengünstige Weise ermöglicht.

Die Lösung der Aufgabe erfolgt durch ein Speichersystem zur Speicherung eines kryogenen Mediums, insbesondere zur Speicherung von Wasserstoff, mit den Merkmalen gemäß Anspruch 1.

Das Speichersystem umfasst einen Speicherbehälter zur Aufnahme des Mediums, wobei zumindest ein Rohr von außerhalb des Speicherbehälters in den Speicherbehälter ragt, wobei das Rohr an seinem vom Speicherbehälter abgewandten Ende verschlossen ist und an seinem im Speicherbehälter befindlichen Ende offen ist, wobei an dem Rohr an einer bestimmten Position ein Absperrventil angeordnet ist, so dass der Innenraum des Rohres bei geöffnetem Absperrventil mit dem Innenraum des Speicherbehälters fluidleitend verbunden ist und der Innenraum des Rohres bei geschlossenem Absperrventil mit dem Innenraum des Speicherbehälters nicht fluidleitend verbunden ist.

Erfindungsgemäß ist somit ein Speichersystem, also Tank, zur Speicherung eines kryogenen Mediums, so ausgebildet, dass eine dünne Rohrleitung von außen in den Tank ragt - bevorzugt in die Flüssigkeit im Tank -, wobei die Rohrleitung außen verschlossen ist und die Rohrleitung tankinnenseitig ein offenes Ende aufweist und auf diese Weise das kryogene Medium mit dem Rohrinnenraum in Kontakt treten kann.

Die Rohrleitung weist ein Absperrventil auf, wobei mittels des Absperrventils der Druck im Tank geregelt/gesteuert werden kann bzw. bei Öffnen des Ventils der Druck im Tank erhöht wird. Das Absperrventil ist bevorzugt durch eine Steuereinrichtung steuerbar, insbesondere öffenbar und schließbar.

Das Rohr ist dazu eingerichtet, thermoakustische Schwingungen auszubilden, so dass bei Verbindung mit einem kryogenen Medium ein auf thermoakustischen Effekt basierender Druckaufbau im Inneren des Rohres erfolgt.

Hierdurch kann eine Erhöhung des Drucks im Tank erfolgen, ohne dass, wie sonst üblich, durch Zusatzheizer dem Tank Wärmeenergie zugeführt werden muss.

Ein thermoakustisches Druckaufbausystem macht sich den Effekt der thermoakustischen Schwingungen (TAO) zunutze, um den Druck im Tanksystem zu erhöhen. Dabei wird das in der Rohrleitung befindliche Gas durch Wärmetransport von der Rohrleitungswand in das Gas in Schwingung versetzt.

TAO sind für eine lange Speicherdauer von kryogenen Medien, insbesondere Wasserstoff und Helium, unbedingt zu vermeiden, können aber für den vorliegenden Fall des gewünschten Druckaufbaues genutzt werden.

Die Bauteile beschränken sich dabei erfindungsgemäß auf ein Absperrventil und eine dünne Rohrleitung, die an der warmen Seite bevorzugt eine ausreichend große Wärmeübergangsfläche, zum Beispiel durch Ausbildung von Rohr-Rippen, zur Verfügung stellt. Am warmen Ende, also außerhalb des Speicherbehälters, ist die Rohrleitung geschlossen. Das Rohr ist bevorzugt außerhalb des Speicherbehälters vollständig geschlossen.

Erfindungsgemäß ist eine Flüssigentnahmeleitung zur Entnahme flüssigen Mediums aus dem Speicherbehälter eingerichtet.

Vorzugsweise ist das Rohr an seinem vom Speicherbehälter abgewandten Ende, also an der warmen Seite, für verbesserten Wärmeübergang ausgebildet, bevorzugt durch zumindest eine Wärmeübergangsfläche, zum Beispiel durch Rohr-Rippen.

An dem vom Speicherbehälter abgewandten Ende des Rohres ist gemäß einer nicht beanspruchten Ausführungsform ein Wärmeübertrager angeordnet, zur Übertragung von Wärme an das Rohr, insbesondere von Wärme aus vorbeiströmender Luft und/oder aus einer Kühlflüssigkeit.

Das kalte offene Ende der Rohrleitung steht dabei bei einem gefüllten Speicherbehälter in die kryogene Flüssigkeit. Die Rohrleitung des vorzugsweise vakuum-isolierten Behälters führt durch den Vakuumraum bis auf die warme Seite, also Außenseite des Behälters. Die Position des Absperrventils der Rohrleitung ist bevorzugt entweder im Vakuumbereich oder knapp an der warmen Seite des Behälters. Die Funktion des Absperrventils ist die gezielte Unterdrückung von thermoakustischen Schwingungen, die im Ruhezustand des Behälters unerwünscht sind. Bei idealer Auslegung des Systems stellt sich thermoakustische Resonanz ein, die einen Druckaufbau innerhalb kürzester Zeit ermöglicht. Wesentlich für die Funktion ist ein entsprechender Temperaturgradient des warmen und des kalten Endes der Rohrleitung. Bevorzugt bildet die Umgebungstemperatur das warme Ende aus und das kalte Ende wird von einer tiefsiedenden Flüssigkeit im Speicherbehälter, wie Wasserstoff oder Helium, gekühlt.

Bevorzugt ist der Speicherbehälter doppelwandig ausgebildet, mit einem isolierenden Vakuumraum zwischen den beiden Wänden des Speicherbehälters, wobei das vom Speicherbehälter abgewandte Ende des Rohres außerhalb des isolierenden Vakuumraums liegt und das Rohr durch den Vakuumraum hindurchtritt und in den Speicherbehälter mündet. Weiters spielt auch das Verhältnis von Rohrlänge zu Rohrdurchmesser als auch die Wandstärke des Rohres eine wesentliche Rolle. Dabei muss das Rohr möglichst lang und möglichst dünn sein, sowie die Wandstärke möglichst gering.

Der Innendurchmesser des Rohres ist daher über die gesamte Rohrlänge, oder zumindest außerhalb des Speicherbehälters, also am warmen Ende, gering, bevorzugt maximal 20 mm oder maximal10 mm, besonders bevorzugt maximal6 mm.

Das Rohr weist außerhalb des Speicherbehälters bevorzugt eine Länge auf von mindestens 50 mm, bevorzugt mindestens 100 mm, besonders bevorzugt mindestens200 mm.

Das Rohr weist innerhalb des Speicherbehälters bevorzugt eine Länge auf von mindestens 500 mm, bevorzugt mindestens 1000 mm, besonders bevorzugt mindestens 2000 mm.

Das Rohr weist bevorzugt eine Wandstärke auf von maximal 3 mm, bevorzugt maximal 2 mm, besonders bevorzugt maximal 1 mm.

Das Verhältnis von gesamter Länge zu Innendurchmesser des Rohres beträgt bevorzugt mindestens100:1, bevorzugt mindestens 400: 1, besonders bevorzugt mindestens 800:1.

Ein thermoakustisches Druckaufbausystem kann als alleiniges als auch zur Ergänzung von herkömmlichen Druckaufbausystemen eingesetzt werden.

Um die Leistung des Systems zu erhöhen können mehrere, insbesondere parallel angeordnete, Rohrleitungen verwendet werden.

Das Speichersystem weist daher bevorzugt mehrere solche Rohre auf, die von außerhalb des Speicherbehälters in den Speicherbehälter ragen, wobei an jedem Rohr ein eigenes Absperrventil angeordnet ist oder zumindest zwei Rohre, bevorzugt alle Rohre, über Absperrventile in einem gemeinsamen Ventilblock geöffnet und geschlossen werden können. Werden mehrere Rohrleitungen parallel verwendet, das heißt die Leistung des Systems durch Parallelanordnung multipliziert, können diese somit über einzelne Ventile oder einen großen "Ventilblock" geschlossen oder geöffnet werden.

Um die Leistung des Systems weiter zu erhöhen kann auf der warmen Seite der Leitung zusätzlich Wärme über einen Wärmeübertrager eingebracht werden. Diese Wärme kann beispielsweise aus der vorbeiströmenden Luft oder aus der Abwärme des Verbrauchers mittels Kühlflüssigkeit zugeführt werden.

Um die Leitung(en) im Falle des Ruhezustandes noch besser vor Strahlungswärme von außen zu schützen können diese mit einer Isolation bzw. Strahlungsschilden, beispielsweise Mehrschichtisolation (MLI) umwickelt werden. Je nach Variante ist dann die gesamte oder ein Teil der Leitungslänge im Vakuumraum isoliert. Das Rohr kann somit über einen Rohrabschnitt im Vakuumraum wärmeisoliert ausgebildet sein.

Für eine weitere Verstärkung des thermoakustischen Effekts kann die Geometrie des Rohrendes im Innentank angepasst werden. zB. eine Reduktion des offenen Querschnitts der Leitung bzw. eine kontinuierliche Verjüngung des Rohrendes. Das Rohr weist daher bevorzugt über einen Rohrabschnitt im Inneren des Speicherbehälters einen geringeren Innendurchmesser auf, als über einen Rohrabschnitt außerhalb des Speicherbehälters, insbesondere einen reduzierten Innendurchmesser oder eine kontinuierliche Verjüngung zu dem im Speicherbehälter befindlichen Ende des Rohres hin.

Ein thermoakustisches Druckaufbausystem wie zuvor beschrieben, kann auch als Ergänzung zu Druckaufbausystemen nach dem Stand der Technik verwendet werden.

Die Funktionsweise einer erfindungsgemäßen Vorrichtung ist: Im Ruhezustand ist das in der Leitung befindliche Ventil geschlossen, um thermoakustische Schwingungen zu unterbinden. Ist ein Druckaufbau erwünscht wird das Ventil geöffnet, ein der Umgebungstemperatur ausgesetzter langer Leitungsabschnitt freigegeben und somit das kritische Länge- zu Durchmesser-Verhältnis überschritten. Das im Rohr befindliche Gas beginnt sich aufgrund des Wärmetransportes über die Rohrwand auszudehnen und wieder zusammen zu ziehen, also zu schwingen, stößt mit jeder Schwingung Gas am in die Flüssigkeit stehenden Rohrende aus und saugt Flüssigkeit wieder ein welche im Rohr anschließend zumindest teilweise verdampft. Dadurch wiederholt sich der Effekt bzw. wird dieser weiter verstärkt. Idealerweise stellt sich in kürzester Zeit Resonanz ein, wodurch kontinuierlich Wärme in das System eingebracht wird.

### Kurzbeschreibung der Zeichnungen

Die Erfindung wird im Folgenden beispielhaft unter Bezugnahme auf die Zeichnungen beschrieben.
- Fig. 1: ist eine schematische Darstellung eines nicht erfindungsgemäßen Speichersystem.
- Fig. 2: ist eine schematische Darstellung eines nicht erfindungsgemäßen Speichersystem in einer alternativen Ausführungsform.
- Fig. 3: ist eine schematische Darstellung eines erfindungsgemäßen Speichersystem.
- Fig. 4: ist eine schematische Darstellung eines erfindungsgemäßen Speichersystem in einer alternativen Ausführungsform.
- Fig. 5: ist eine schematische Darstellung eines erfindungsgemäßen Speichersystem in einer alternativen Ausführungsform.
- Fig. 6: ist eine schematische Darstellung eines erfindungsgemäßen Speichersystem in einer alternativen Ausführungsform.
- Fig. 7: ist eine schematische Darstellung eines nicht erfindungsgemäßen Speichersystem in einer alternativen Ausführungsform.
- Fig. 8: ist eine schematische Darstellung eines erfindungsgemäßen Speichersystem in einer alternativen Ausführungsform.

### Detaillierte Beschreibung der Erfindung

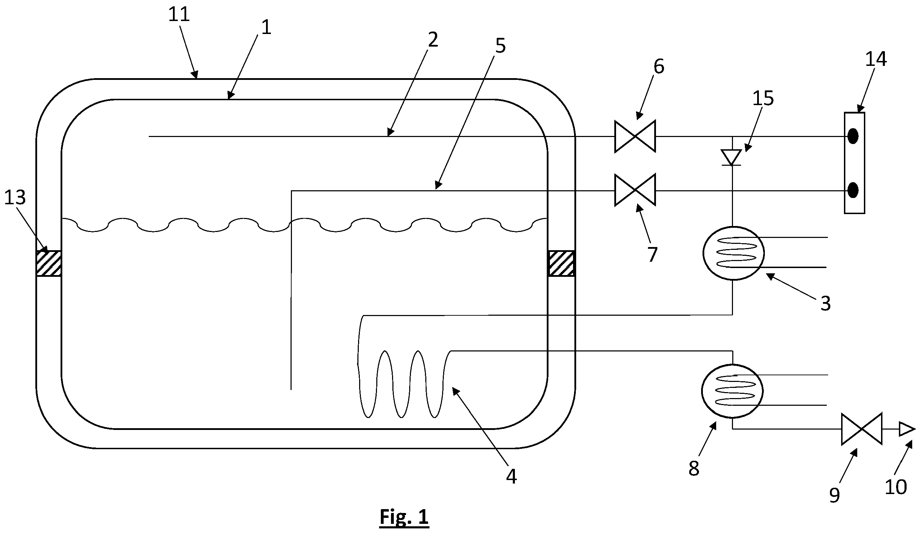

In der Fig.1 ist ein nicht erfindungsgemäßes Speichersystem zur Speicherung eines kryogenen Mediums, insbesondere zur Speicherung von Wasserstoff, dargestellt.

Das Speichersystem umfasst einen Speicherbehälter 1 zur Aufnahme des Mediums. Der Speicherbehälter 1 bildet einen Innenbehälter eines doppelwandigen Behälters, der zusätzlich einen Außenbehälter 11 umfasst. Zwischen Außenbehälter 11 und Innenbehälter, also Speicherbehälter 1, ist ein Vakuum gebildet. Zwischen Außenbehälter 11 und Innenbehälter sind zudem abschnittsweise Aufhängungen 13 angeordnet, um die beiden Schalen des doppelwandigen Behälters zueinander zu positionieren.

Das kryogene Medium, insbesondere Wasserstoff, befindet sich im unteren Bereich des Speicherbehälters 1, nämlich unterhalb der in den Fig. als Wellenlinie dargestellten Flüssigkeitsoberfläche als Flüssigkeit im Behälter, oberhalb der wellenförmigen Flüssigkeitsoberfläche in gasförmigem Zustand.

Eine Gasentnahmeleitung 2 ist zur Entnahme des gasförmigen Mediums aus dem Speicherbehälter 1 eingerichtet, so dass das freie Ende der Gasentnahmeleitung 2 oberhalb der Flüssigkeitsoberfläche, in der Nähe der Decke des Speicherbehälters 1, im Speicherbehälter 1 endet.

Eine Flüssigentnahmeleitung 5 ist zur Entnahme des flüssigen Mediums aus dem Speicherbehälter 1 eingerichtet, so dass das freie Ende der Flüssigentnahmeleitung 5 unterhalb der Flüssigkeitsoberfläche, in der Nähe des Bodens des Speicherbehälters 1, im Speicherbehälter 1 endet.

Die Begriffe "Decken" und "Boden" beziehen sich dabei auf die übliche Einbaulage des Speicherbehälters, beispielsweise in einer fahrenden, schwimmenden oder fliegenden Transportvorrichtung, wobei die Gravitation in einem Normalbetrieb der Transportvorrichtung in Richtung zum Boden des Speicherbehälters wirkt.

In der Gasentnahmeleitung 2 ist ein erstes steuerbares Leitungs-Absperrventil 6 angeordnet und in der Flüssigentnahmeleitung 5 ist ein zweites steuerbares Leitungs-Absperrventil 7 angeordnet. Beide Leitungs-Absperrventile befinden sich außerhalb des Speicherbehälters 1. In der Fig. 1 befinden sich die Leitungs-Absperrventile auch außerhalb des Au-ßenbehälters 11.

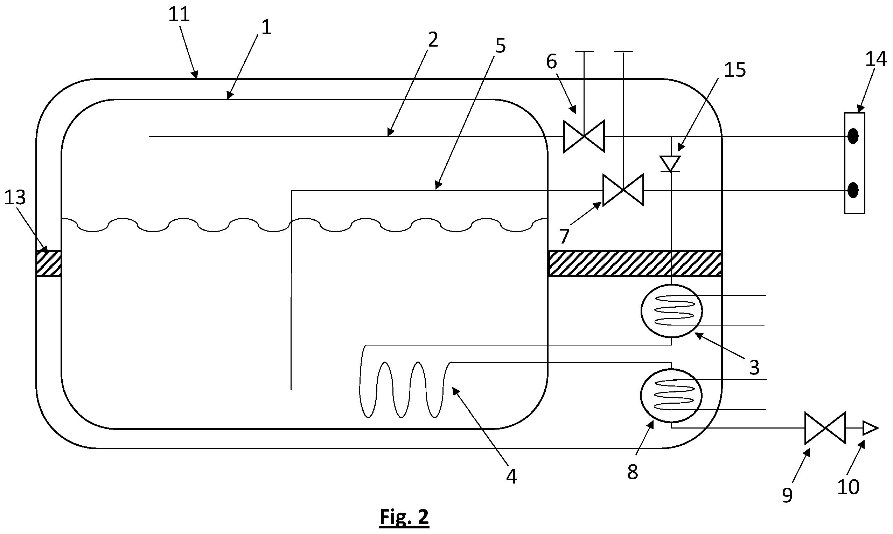

In der alternativen Ausführung des Speichersystems die in Fig. 2 dargestellt ist, sind die beiden Leitungs-Absperrventile innerhalb des Außenbehälters 11 angeordnet, also zwischen dem Innenbehälter, Speicherbehälter 1, und dem Außenbehälter des doppelwandigen Speicherbehälters, insbesondere im Vakuumraum.

Die Leitungs-Absperrventile sind durch eine Steuervorrichtung, die ebenfalls im Vakuumraum (Fig.2) oder außerhalb des gesamten Behälters (Fig. 1) angeordnet ist, steuerbar. Dabei kann die Strömung durch die Leitungs-Absperrventile bevorzugt nicht nur unterbrochen werden oder freigegeben werden, sondern auch reduziert werden.

Über die Gasentnahmeleitung 2 und/oder die Flüssigentnahmeleitung 5, bevorzugt auch über das erste Leitungs-Absperrventil 6 und/oder das zweite Leitungs-Absperrventil 7, kann auch eine Betankung des Speicherbehälters 1 aus einer Betankungsvorrichtung 14 erfolgen.

Die Gasentnahmeleitung 2 und die Flüssigentnahmeleitung 5 werden nach den beiden Leitungs-Absperrventilen 6, 7 zu einer gemeinsamen Leitung zusammengeführt. In der Gasentnahmeleitung 2 kann ein gleichrichtendes Ventil, insbesondere ein Rückschlagventil 15, angeordnet sein, so dass nur die Strömungsrichtung vom ersten Leitungs-Absperrventil 6 zum ersten Wärmetauscher 3 ermöglicht wird, die Gegenrichtung gesperrt wird.

Die Gasentnahmeleitung 2 und die Flüssigentnahmeleitung 5 sind in Form der gemeinsamen Leitung mit dem außerhalb des Speicherbehälters 1, beispielsweise zwischen Speicherbehälter 1 und Außenbehälter 11 des doppelwandigen Speicherbehälters (Fig. 2), angeordneten ersten Wärmetauscher 3 zur Erwärmung des entnommenen Mediums strömungsverbunden.

Stromabwärts des ersten Wärmetauschers 3 ist innerhalb des Speicherbehälters 1 ein Innentank-Wärmetauscher 4 zur Erwärmung des flüssigen Mediums im Speicherbehälter 1 angeordnet, der vom erwärmten, aus dem Speicherbehälter 1 entnommenen Medium durchflossen wird. Durch die Erwärmung am Innentank-Wärmetauscher 4 wird das flüssige Medium im Speicherbehälter 1 teilweise erwärmt und verdampft.

In der Gasentnahmeleitung 2 und in der Flüssigentnahmeleitung 5 ist kein steuerbares Dreiwegeventil angeordnet, so dass das gesamte durch die Gasentnahmeleitung 2 und/oder durch die Flüssigentnahmeleitung 5 entnommene und vom ersten Wärmetauscher 3 erwärmte Medium zum Innentank-Wärmetauscher 4 gelangt.

Da der Druck im Speicherbehälter 1 mittels des ersten und zweiten Leitungs-Absperrventils 6, 7 geregelt wird, ist kein steuerbares Dreiwegeventil erforderlich.

Eine Steuereinheit des Speichersystems ist dazu eingerichtet, den Druck im Speicherbehälter 1 bei der Entnahme des Mediums dadurch zu steuern, dass die Steuereinheit wahlweise das erste Leitungs-Absperrventil 6 und/oder das zweite Leitungs-Absperrventil 7 öffnet, so dass das Medium wahlweise über die Gasentnahmeleitung 2 und/oder über die Flüssigentnahmeleitung 5 aus dem Speicherbehälter 1 entnommen wird.

Stromabwärts des Innentank-Wärmetauschers 4 und außerhalb des Speicherbehälters 1, außerhalb (Fig. 1) oder innerhalb (Fig. 2) des Außenbehälters 11 des doppelwandigen Behälters, ist ein zweiter Wärmetauscher 8 zur Erwärmung des Mediums angeordnet.

Das über die Gasentnahmeleitung 2 und/oder die Flüssigentnahmeleitung 5 entnommene Medium wird stromabwärts des Innentank-Wärmetauschers 4 einem Verbraucher 10 zugeführt, insbesondere einer Brennstoffzelle. Zwischen dem zweiten Wärmetauscher 8 und dem Verbraucher 10 ist ein drittes Leitungs-Absperrventil 9 angeordnet.

Die Ausführungsform der Fig. 2 unterscheidet sich dadurch von der Fig. 1, dass steuerungsrelevante Komponenten des Speichersystems, wie der erste Wärmetauscher 3, der zweite Wärmetauscher 8, das erste Leitungs-Absperrventil 6 und das zweite Leitungs-Absperrventil 8, sowie das Rückschlagventil 15 innerhalb des Außenbehälters 11 angeordnet sind, nicht außerhalb des Außenbehälters 11 wie in Fig. 1, und somit im Zwischenraum des doppelwandigen Behälters angeordnet sind, der einen Vakuumraum bildet.

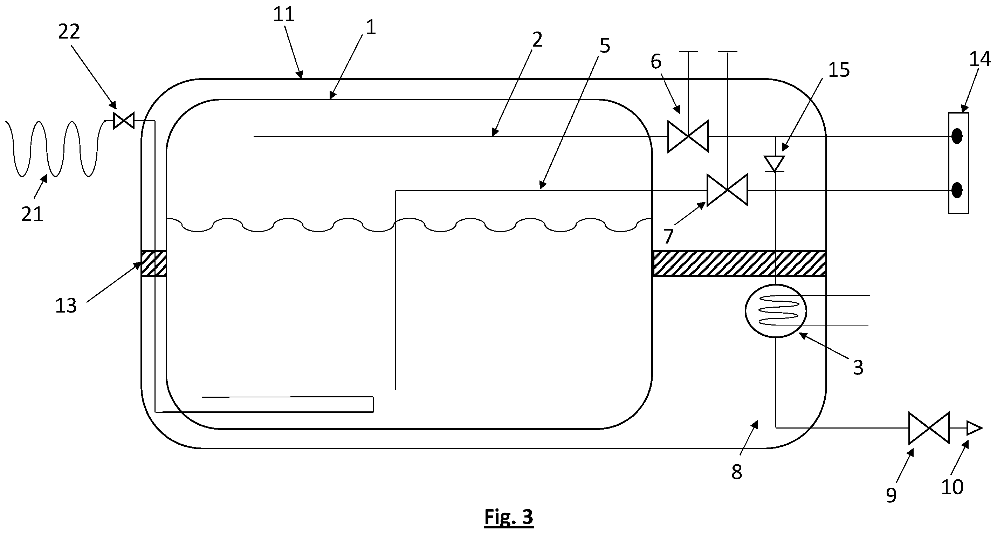

In der Fig. 3 ist ein erfindungsgemäßes Speichersystem zur Speicherung eines kryogenen Mediums, insbesondere zur Speicherung von Wasserstoff, dargestellt.

Das erfindungsgemäße Speichersystem umfasst ein Rohr 21, dass von außerhalb des Speicherbehälters 1 in den Speicherbehälter 1 ragt, wobei das Rohr 21 an seinem vom Speicherbehälter 1 abgewandten Ende verschlossen ist und an seinem im Speicherbehälter 1 befindlichen Ende offen ist, wobei an dem Rohr 21 ein Absperrventil 22 angeordnet ist, so dass der Innenraum des Rohres 21 bei geöffnetem Absperrventil 22 mit dem Innenraum des Speicherbehälters 1 fluidleitend verbunden ist und der Innenraum des Rohres 21 bei geschlossenem Absperrventil 22 mit dem Innenraum des Speicherbehälters 1 nicht fluidleitend verbunden ist.

Das Speichersystem weist keinen Innentank-Wärmetauscher 4 zur Erwärmung des flüssigen Mediums im Speicherbehälter 1 auf.

Das Rohr 21 ist dazu eingerichtet, thermoakustische Schwingungen auszubilden, so dass bei Verbindung mit einem kryogenen Medium im Speicherbehälter 1, bei geöffnetem Absperrventil 22, ein thermoakustischer Druckaufbau im Inneren des Rohres 21 erfolgt.

Der Speicherbehälter 1 ist doppelwandig ausgebildet, mit einem isolierenden Vakuumraum zwischen den beiden Wänden 1, 11 des Speicherbehälters 1, wobei das vom Speicherbehälter 1 abgewandte Ende des Rohres 21 außerhalb des isolierenden Vakuumraums liegt und das im Speicherbehälter 1 befindliche Ende des Rohres 21 innerhalb des isolierenden Vakuumraums liegt bzw. das Rohr durch den Vakuumraum hindurchtritt und in den Speicherbehälter 1 mündet.

Das Rohr 21 kann eine geeignete Geometrie aufweisen, um eine gewünschte Rohrlänge auf kleinerem Bauraum unterzubringen, beispielsweise Mäander- oder Spiralform.

Das Absperrventil 22 des Rohres 21 ist in Fig. 3 außerhalb des Speicherbehälters 1 und außerhalb des Vakuumraums, also außerhalb des Außenbehälters 11 angeordnet.

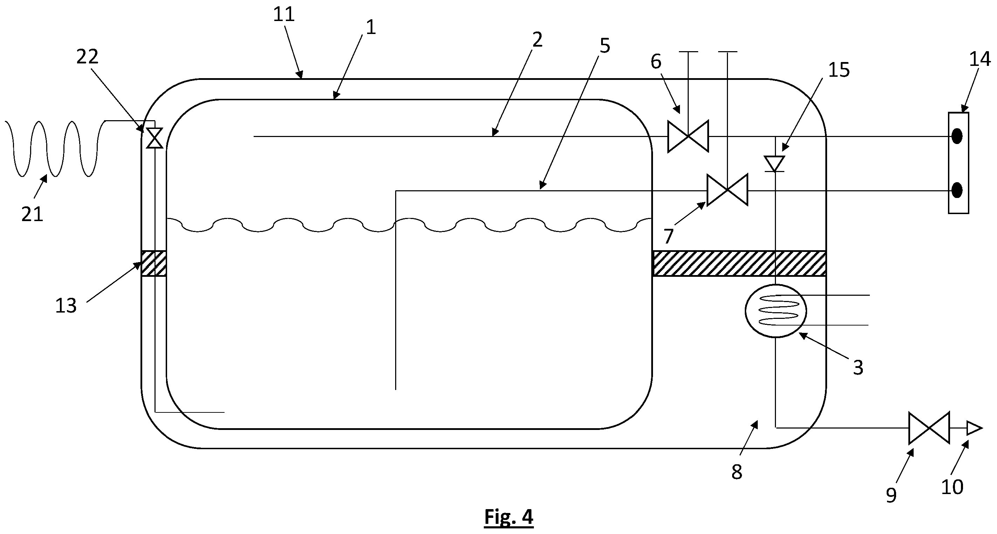

In der Ausführungsform der Fig. 4 ist im Gegensatz zu Fig. 3 das Absperrventil 22 des Rohres 21 im Vakuumraum angeordnet, also zwischen dem Innenbehälter des Speicherbehälters 1 und dem Außenbehälter 11.

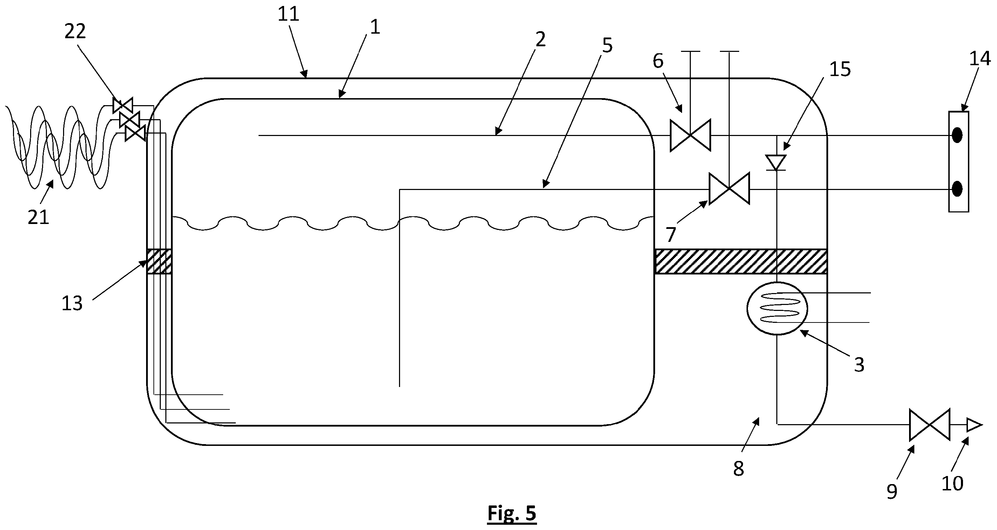

Fig. 5 zeigt, dass das Speichersystem zur Ausbildung einer höheren Leistung mehrere solche Rohre 21 aufweist, die zur Ausbildung von thermoakustischen Schwingungen eingerichtet sind und die daher von außerhalb des Speicherbehälters 1 in den Speicherbehälter 1 ragen. In Fig. 5 ist an jedem Rohr 21 ein eigenes Absperrventil 22 angeordnet. Damit kann beispielsweise die Wärmeleistung durch zeitweise Aktivierung einzelner Ventile gesteuert werden.

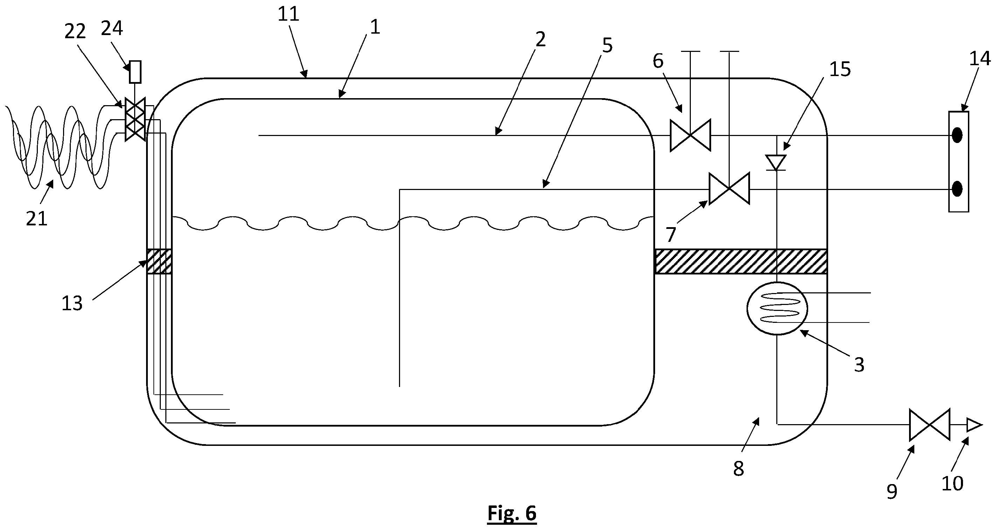

Die Ausführungsform der Fig. 6 unterscheidet sich von jener der Fig. 5 nur dadurch, dass alle Rohre 21 über Absperrventile 22 in einem gemeinsamen Ventilblock 24 gemeinsam geöffnet und geschlossen werden können. Die Aktuierung des Druckaufbaus durch die mehreren Rohre 21 wird dadurch vereinfacht.

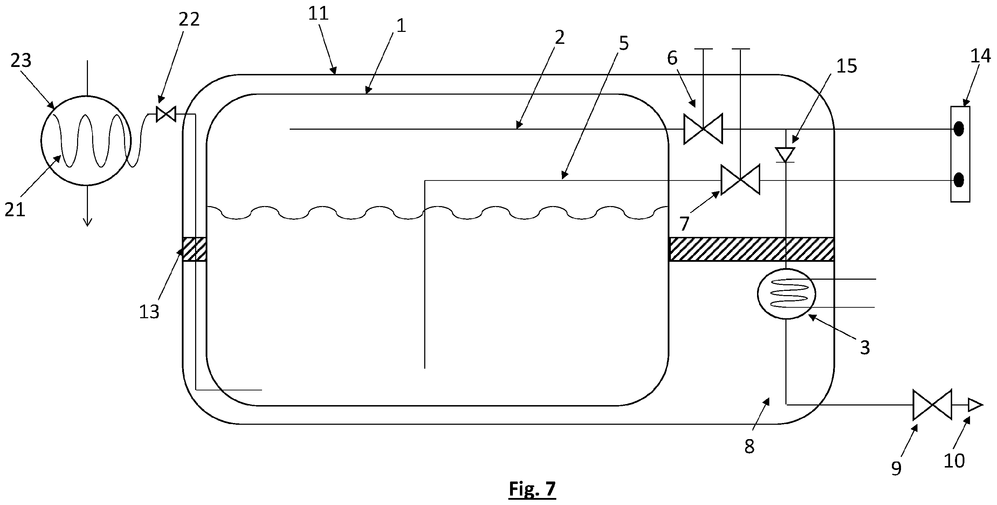

In der nicht erfindungsgemäßen Ausführungsform der Fig. 7 ist, an dem vom Speicherbehälter 1 abgewandten Ende des Rohres 21 ein Wärmeübertrager 23 angeordnet, zur Übertragung von Wärme an das Rohr 21, insbesondere von Wärme aus vorbeiströmender Luft und/oder aus einer Kühlflüssigkeit.

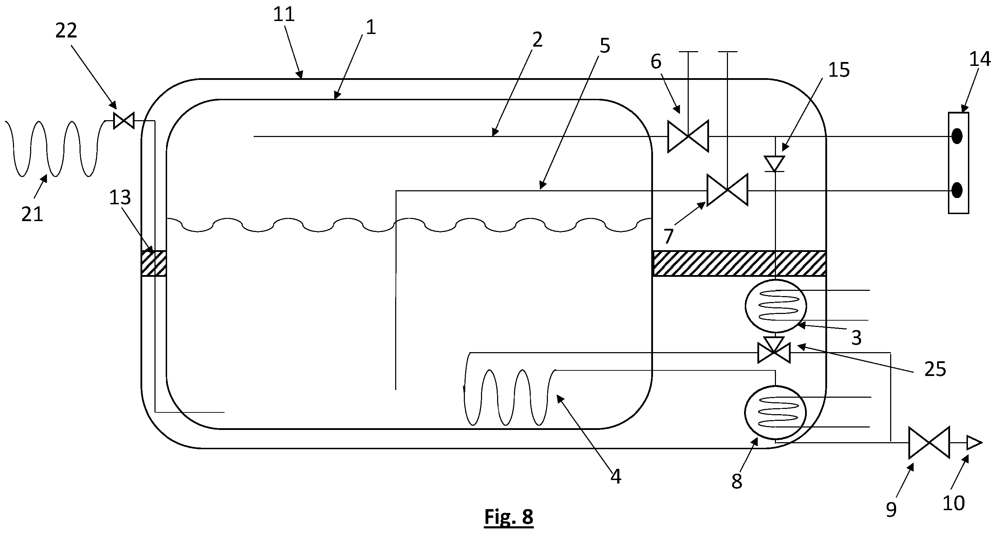

Die erfindungsgemäße Ausführungsform der Fig. 8 schließlich weist zusätzlich zu dem thermoakustisches Druckaufbausystem mittels Rohr 21 ein klassisches Druckaufbausystem auf, nämlich stromabwärts des ersten Wärmetauschers 3 einen innerhalb des Speicherbehälters 1 angeordneten Innentank-Wärmetauscher 4 zur Erwärmung des flüssigen Mediums im Speicherbehälter 1, der von dem, aus dem Speicherbehälter 1 entnommenen Medium durchflossen wird. Durch die Erwärmung am Innentank-Wärmetauscher 4 wird das flüssige Medium im Speicherbehälter 1 teilweise erwärmt und verdampft. Das klassische Druckaufbausystem der Fig. 8 entspricht somit im Wesentlichen demjenigen der Fig. 1 und 2. Hierbei kann der Druckaufbau über ein Teilstromregelventil 25 geregelt werden.

Es wird darauf hingewiesen, dass die Figuren rein schematisch dargestellt sind und nicht die tatsächlichen Größen- und Längenverhältnisse wiedergeben müssen.

### Bezugszeichenliste

- 1: Speicherbehälter
- 2: Gasentnahmeleitung
- 3: erster Wärmetauscher
- 4: Innentank-Wärmetauscher
- 5: Flüssigentnahmeleitung
- 6: erstes steuerbares Leitungs-Absperrventil
- 7: zweites steuerbares Leitungs-Absperrventil
- 8: zweiter Wärmetauscher
- 9: drittes steuerbares Leitungs-Absperrventil
- 10: Verbraucher
- 11: Außenbehälter
- 13: Aufhängung
- 14: Betankungsvorrichtung
- 15: Rückschlagventil

- 21: Rohr
- 22: Absperrventil
- 23: Wärmeübertrager
- 24: Ventilblock
- 25: Teilstromregelventil

## Patentansprüche

1. Speichersystem zur Speicherung eines kryogenen Mediums, insbesondere zur Speicherung von Wasserstoff, umfassend einen Speicherbehälter (1) zur Aufnahme des Mediums,
wobei zumindest ein Rohr (21) von außerhalb des Speicherbehälters (1) in den Speicherbehälter (1) ragt, wobei das Rohr (21) an seinem vom Speicherbehälter (1) abgewandten Ende verschlossen ist und an seinem im Speicherbehälter (1) befindlichen Ende offen ist, wobei an dem Rohr (21) ein Absperrventil (22) angeordnet ist, so dass der Innenraum des Rohres (21) bei geöffnetem Absperrventil (22) mit dem Innenraum des Speicherbehälters (1) fluidleitend verbunden ist und der Innenraum des Rohres (21) bei geschlossenem Absperrventil (22) mit dem Innenraum des Speicherbehälters (1) nicht fluidleitend verbunden ist, wobei der Außendurchmesser des Rohrs (21) über die gesamte Rohrlänge gering ist, wobei das Rohr (21) dazu eingerichtet ist, thermoakustische Schwingungen auszubilden und somit Teil eines thermoakustischen Druckaufbausystems ist, wobei sich die Bauteile des thermoakustischen Druckaufbausystems auf eine dünne Rohrleitung des Rohrs (21) und das Absperrventil (22) beschränken, wobei eine Flüssigentnahmeleitung (5) zur Entnahme flüssigen Mediums aus dem Speicherbehälter (1) eingerichtet ist.

2. Speichersystem nach Anspruch 1,
**dadurch gekennzeichnet , dass** der Speicherbehälter (1) doppelwandig ausgebildet ist, mit einem isolierenden Vakuumraum zwischen den beiden Wänden des Speicherbehälters (1), wobei das vom Speicherbehälter (1) abgewandte Ende des Rohres (21) außerhalb des isolierenden Vakuumraums liegt und das Rohr (21) durch den Vakuumraum hindurchtritt und in den Speicherbehälter (1) mündet.

3. Speichersystem nach zumindest einem der vorhergehenden Ansprüche,
**dadurch gekennzeichnet , dass** das Rohr (21) an seinem vom Speicherbehälter (1) abgewandten Ende für verbesserten Wärmeübergang ausgebildet ist, bevorzugt durch zumindest eine Wärmeübergangsfläche, zum Beispiel durch Rohr-Rippen.

4. Speichersystem nach zumindest einem der vorhergehenden Ansprüche,
**dadurch gekennzeichnet , dass** der Innendurchmesser des Rohres (21) über die gesamte Rohrlänge maximal 20 mm, bevorzugt maximal 10 mm, besonders bevorzugt maximal 6 mm ist.

5. Speichersystem nach zumindest einem der vorhergehenden Ansprüche,
**dadurch gekennzeichnet , dass** das Rohr (21) außerhalb des Speicherbehälters (1) eine Länge aufweist, von mindestens 50mm, bevorzugt mindestens 100 mm, besonders bevorzugt mindestens 200 mm und/oder dass das Verhältnis von gesamter Länge zu Innendurchmesser des Rohres (21) mindestens 100:1 beträgt, bevorzugt mindestens 400:1, besonders bevorzugt mindestens 800:1.

6. Speichersystem nach zumindest einem der vorhergehenden Ansprüche,
**dadurch gekennzeichnet , dass** das Speichersystem mehrere solche Rohre (21) aufweist, die von außerhalb des Speicherbehälters (1) in den Speicherbehälter (1) ragen, wobei an jedem Rohr (21) ein eigenes Absperrventil (22) angeordnet ist oder wobei zumindest zwei Rohre (21), bevorzugt alle Rohre (21), über Absperrventile (22) in einem gemeinsamen Ventilblock (24) geöffnet und geschlossen werden können.

7. Speichersystem nach zumindest einem der vorhergehenden Ansprüche,
**dadurch gekennzeichnet , dass** das Rohr (21) über einen Rohrabschnitt im Vakuumraum wärmeisoliert ausgebildet ist.

8. Speichersystem nach zumindest einem der vorhergehenden Ansprüche,
**dadurch gekennzeichnet , dass** das Rohr (21) über einen Rohrabschnitt im Inneren des Speicherbehälters einen geringeren Innendurchmesser aufweist, als über einen Rohrabschnitt außerhalb des Speicherbehälters, insbesondere einen reduzierten Innendurchmesser oder eine kontinuierliche Verjüngung zu dem im Speicherbehälter befindlichen Ende des Rohres hin.

## Claims

1. Storage system for storing a cryogenic medium, in particular for storing hydrogen, comprising a storage container (1) for receiving the medium,
wherein at least one pipe (21) projects from outside the storage container (1) into the storage container (1), wherein the pipe (21) is closed at the end thereof directed away from the storage container (1) and is open at the end thereof located in the storage container (1), wherein a shut-off valve (22) is arranged on the pipe (21) so that the inner space of the pipe (21) is connected to the inner space of the storage container (1) in a fluid-conducting manner when the shut-off valve (22) is opened and the inner space of the pipe (21) is not connected to the inner space of the storage container (1) in a fluid-conducting manner when the shut-off valve (22) is closed, wherein the external diameter of the pipe (21) is small over the entire pipe length, wherein the pipe (21) is configured to form thermo-acoustic oscillations and is thus part of a thermo-acoustic pressure build-up system, wherein the components of the thermo-acoustic pressure build-up system are limited to a thin pipeline of the pipe (21) and the shut-off valve (22), wherein a liquid removal line (5) is adapted to remove liquid medium from the storage container (1).

2. Storage system according to Claim **1,**
**characterized in that** the storage container (1) is constructed with double walls, with an insulating vacuum space between the two walls of the storage container (1), wherein the end of the pipe (21) directed away from the storage container (1) is located outside the insulating vacuum space and the pipe (21) extends through the vacuum space and opens into the storage container (1).

3. Storage system according to at least one of the preceding claims,
**characterized in that** the pipe (21) is constructed at the end thereof directed away from the storage container (1) for improved heat transfer, preferably by at least one heat transfer area, for example, by pipe ribs.

4. Storage system according to at least one of the preceding claims,
**characterized in that** the internal diameter of the pipe (21), over the entire pipe length, is a maximum of 20 mm, preferably a maximum of 10 mm, particularly preferably a maximum of 6 mm.

5. Storage system according to at least one of the preceding claims,
**characterized in that** the pipe (21) has outside the storage container (1) a length of at least 50 mm, preferably at least 100 mm, particularly preferably at least 200 mm and/or **in that** the ratio of the total length to the internal diameter of the pipe (21) is at least 100:1, preferably at least 400:1, particularly preferably at least 800:1.

6. Storage system according to at least one of the preceding claims,
**characterized in that** the storage system has a plurality of such pipes (21) which project from outside the storage container (1) into the storage container (1), wherein an individual shut-off valve (22) is arranged on each pipe (21) or wherein at least two pipes (21), preferably all the pipes (21), can be opened and closed via shut-off valves (22) in a common valve block (24).

7. Storage system according to at least one of the preceding claims,
**characterized in that** the pipe (21) is constructed in a thermally insulated manner via a pipe portion in the vacuum space.

8. Storage system according to at least one of the preceding claims,
**characterized in that** the pipe (21) has over a pipe portion inside the storage container a smaller internal diameter than over a pipe portion outside the storage container, in particular a reduced internal diameter or a continuous tapering towards the end of the pipe located in the storage container.

## Revendications

1. Système de stockage pour stocker un fluide cryogénique, en particulier pour stocker de l'hydrogène, comprenant un réservoir de stockage (1) pour recevoir le fluide,
au moins un tuyau (21) s'étendant, depuis l'extérieur du réservoir de stockage (1), dans le réservoir de stockage (1), le tuyau (21) étant fermé à son extrémité opposée au réservoir de stockage (1) et ouvert à son extrémité située dans le réservoir de stockage (1), une vanne d'arrêt (22) étant agencée sur le tuyau (21) de telle sorte que l'espace intérieur du tuyau (21) est relié fluidiquement à l'espace intérieur du réservoir de stockage (1) lorsque la vanne d'arrêt (22) est ouverte et que l'espace intérieur du tuyau (21) n'est pas relié fluidiquement à l'espace intérieur du réservoir de stockage (1) lorsque la vanne d'arrêt (22) est fermée, le diamètre extérieur du tuyau (21) étant faible sur toute la longueur du tuyau, le tuyau (21) étant conçu de manière à former des vibrations thermoacoustiques et faisant ainsi partie d'un système thermoacoustique de mise en pression, les composants du système de mise en pression thermoacoustique se limitant à une conduite mince du tuyau (21) et à la vanne d'arrêt (22), une conduite de prélèvement de fluide (5) étant prévue pour prélever le fluide liquide du réservoir de stockage (1).

2. Système de stockage selon la revendication 1, **caractérisé en ce que** le réservoir de stockage (1) est à double paroi, avec un espace vide isolant entre les deux parois du réservoir de stockage (1), l'extrémité du tuyau (21) opposée au réservoir de stockage (1) se trouvant à l'extérieur de l'espace vide isolant et le tuyau (21) traversant l'espace vide et débouchant dans le réservoir de stockage (1).

3. Système de stockage selon au moins une des revendications précédentes,
**caractérisé en ce que** le tuyau (21) est conçu à son extrémité opposée au réservoir de stockage (1) pour un meilleur transfert de chaleur, de préférence par au moins une surface de transfert de chaleur, par exemple par des ailettes.

4. Système de stockage selon au moins une des revendications précédentes,
**caractérisé en ce que** le diamètre intérieur du tuyau (21) est au maximum de 20mm, de préférence au maximum de 10mm, de façon particulièrement préférée au maximum de 6mm sur toute la longueur du tuyau.

5. Système de stockage selon au moins une des revendications précédentes,
**caractérisé en ce que** le tuyau (21) comprend, à l'extérieur du réservoir de stockage (1), une longueur d'au moins 50mm, de préférence d'au moins 100mm, de manière particulièrement préférée d'au moins 200mm, et/ou en ce que le rapport entre la longueur totale et le diamètre intérieur du tuyau (21) est d'au moins 100:1, de préférence d'au moins 400:1, de manière particulièrement préférée d'au moins 800:1.

6. Système de stockage selon au moins une des revendications précédentes,
**caractérisé en ce que** le système de stockage comprend une pluralité de tels tuyaux (21), qui, depuis l'extérieur du réservoir de stockage (1), font saillie à l'intérieur de celui-ci, une vanne d'arrêt (22) étant agencée sur chaque tuyau (21) ou sur au moins deux tuyaux (21), de préférence sur tous les tuyaux (21), ceux-ci étant aptes à être ouverts et fermés par l'intermédiaire de vannes d'arrêt (22) dans un bloc commun (24) de vannes.

7. Système de stockage selon au moins une des revendications précédentes,
**caractérisé en ce que** le tuyau (21) est isolé thermiquement par l'intermédiaire d'une section de tuyau dans l'espace sous vide.

8. Système de stockage selon au moins une des revendications précédentes,
**caractérisé en ce que** le tuyau (21) comprend, sur une section de tuyau située à l'intérieur du réservoir de stockage, un diamètre intérieur inférieur à celui d'une section de tuyau située à l'extérieur du réservoir de stockage, en particulier un diamètre intérieur réduit ou un rétrécissement continu vers l'extrémité du tuyau située dans le réservoir de stockage.
